# EUROPÄISCHE PATENTANMELDUNG

(11) **EP 1 852 305 A1**
(43) Veröffentlichungstag der Anmeldung: **07.11.2007**
(21) Anmeldenummer: 07106064.4
(22) Anmeldetag: 12.04.2007
(51) Int. Cl.: B60Q 1/08

(54) **Scheinwerfer für Fahrzeuge**

(30) Priorität: 05.05.2006 DE 102006020960
(71) Anmelder: Hella KGaA Hueck & Co., 59552 Lippstadt (DE)
(72) Erfinder: Schmidt, Christian, 59955, Winterberg (DE); Irmscher, Tobias, 59555, Lippstadt (DE); Karas, Peter, 59556, Lippstadt (DE)

(57) **Zusammenfassung**

Die Erfindung betrifft einen Scheinwerfer für Fahrzeuge mit mindestens einem Lichtmodul (1) zur Erzeugung einer Lichtverteilung, mit einer dem Lichtmodul (1) zugeordneten Stelleinheit (2) zum Verstellen des Lichtmoduls (1), mit einer Steuereinheit (3), an dessen Eingang Sensorsignale des Fahrzeugs bereitgestellt sind und die ein Ansteuerprogramm aufweist zur Berechnung von auf die Stelleinheit (2) einwirkenden Steuersignalen, mittels derer eine fahrsituationsabhängige Lichtverteilung einstellbar ist, wobei das Ansteuerprogramm (AP) ein Autobahnlichtprogrammteil (5) aufweist, der ein eine Standardlichtverteilung (6) bewirkendes Steuersignal erzeugt, wenn mindestens eine Autobahnlichtbedingung (B) nicht erfüllt ist, der ein eine Autobahnlichtverteilung (A1,A2,A3) bewirkendes Steuersignal erzeugt, wenn mindestens eine Autobahnlichtbedingung erfüllt ist, der ein eine Prioritätslichtverteilung bewirkendes Steuersignal erzeugt, wenn bei aktivierter Autobahnlichtverteilung (A1,A2,A3) eine Prioritätsbedingung (P) erfüllt ist

## Beschreibung

Die Erfindung betrifft einen Scheinwerfer für Fahrzeuge mit mindestens einem Lichtmodul zur Erzeugung einer Lichtverteilung, mit einer dem Lichtmodul zugeordneten Stelleinheit zum Verstellen des Lichtmoduls, mit einer Steuereinheit, an dessen Eingang Sensorsignale des Fahrzeugs bereitgestellt sind und die ein Ansteuerprogramm aufweist zur Berechnung von auf die Stelleinheit einwirkenden Steuersignalen, mittels derer eine fahrsituationsabhängige Lichtverteilung einstellbar ist.

Aus der DE 10 2004 022 813 A1 ist ein Scheinwerfer für Fahrzeuge bekannt, der neben einem Lichtmodul zur Erzeugung einer Lichtverteilung eine Stelleinheit zum Verstellen des Lichtmoduls sowie eine Steuereinheit aufweist. An den Eingang der Steuereinheit liegen Sensorsignale an, die in einem Ansteuerprogramm weiterverarbeitet werden zur Berechnung von Steuersignalen, die auf die Stelleinheit einwirken zur Einstellung einer fahrsituationsabhängigen Lichtverteilung. In Abhängigkeit von der Geschwindigkeit des Fahrzeugs können unterschiedliche Steuersignale erzeugt werden, mittels derer eine Stadtlichtverteilung, eine Landstraßenlichtverteilung oder eine Autobahnlichtverteilung eingestellt werden können. Die Einstellung der unterschiedlichen Lichtverteilungen erfolgt lediglich in Abhängigkeit von einem einzigen fahrsituationsabhängigen Parameter, nämlich der Fahrgeschwindigkeit.

Aufgabe der vorliegenden Erfindung ist es, einen Scheinwerfer für Fahrzeuge derart weiterzubilden, dass eine verbesserte fahrsituationsabhängige Fahrbahnausleuchtung gewährleistet ist.

Zur Lösung dieser Aufgabe ist die Erfindung in Verbindung mit dem Oberbegriff des Patentanspruchs 1 dadurch gekennzeichnet, dass das Ansteuerprogramm ein Autobahnlichtprogrammteil aufweist, der ein eine Standardlichtverteilung bewirkendes Steuersignal erzeugt, wenn mindestens eine Autobahnlichtbedingung nicht erfüllt ist, der ein eine Autobahnlichtverteilung bewirkendes Steuersignal erzeugt, wenn mindestens eine Autobahnlichtbedingung erfüllt ist, der ein eine Prioritätslichtverteilung bewirkendes Steuersignal erzeugt, wenn bei aktivierter Autobahnlichtverteilung eine Prioritätsbedingung erfüllt ist.

Der besondere Vorteil der Erfindung besteht durch Überprüfung insbesondere mehrerer Autobahnlichtbedingungen darin, dass zum einen die Einstellung einer Autobahnlichtverteilung effizienter durchgeführt werden kann. Auf diese Weise kann eindeutig die Voraussetzung für das Vorliegen einer Autobahnlichtverteilung festgestellt werden. Zum anderen ermöglicht die Überprüfung einer Prioritätsbedingung während des Schaltzustandes "Autobahnlichtverteilung", dass auf eine mit einer höheren Priorität versehene Prioritätslichtverteilung selbsttätig umgeschaltet wird. Vorteilhaft wird hierdurch eine direkte Umschaltung vom Schaltzustand "Autobahnlichtverteilung" in den Schaltzustand "Prioritätslichtverteilung" ermöglicht, ohne dass ein Zurückschalten in den Schaltzustand "Abblendlichtverteilung" notwendig wäre.

Nach einer Weiterbildung der Erfindung liegen die maßgeblichen Sensorsignale, die die fahrzeugspezifischen Parameter repräsentieren, ständig an dem Eingang der Steuereinheit an, so dass die Prioritätsbedingung stets sequentiell und wiederkehrend überprüft werden kann. Vorteilhaft kann eine zeitnahe Umschaltung aus dem Schaltzustand "Autobahnlichtverteilung" in den Schaltzustand "Prioritätslichtverteilung" erfolgen.

Nach einer Weiterbildung der Erfindung kann die Änderung des Schaltzustandes von "Autobahnlichtverteilung" in den Schaltzustand "Prioritätslichtverteilung" und/oder "Standardlichtverteilung" und/oder in den Zustand "andere Autobahnlichtverteilung" kontinuierlich während einer Übergangszeit erfolgen, so dass keine plötzlichen Leuchtdichtesprünge auftreten, die den voraus fahrenden Verkehr bzw. den Gegenverkehr stören könnten.

Nach einer Weiterbildung der Erfindung erfolgt die Überprüfung der maßgeblichen fahrsituationsabhängigen Parameter in einem vorgegebenen Zeitintervall, dessen Ende vorzugsweise der aktuellen Fahrsituation entspricht. Auf diese Weise werden die relativ aktuellen fahrsituationsabhängigen Parameter verarbeitet und auf einfache Weise programmtechnisch zur Bestimmung des zeitnahen zukünftigen Schaltzustandes herangezogen.

Nach einer Weiterbildung der Erfindung werden die unterschiedlichen Autobahnlichtbedingungen dazu genutzt, unterschiedliche Autobahnlichtverteilungen zu generieren. Die unterschiedlichen Autobahnlichtverteilungen unterscheiden sich im Wesentlichen durch die unterschiedliche Leuchtdichte bzw. Leuchtweite. Auf diese Weise kann eine fahrsituationsabhängige Optimierung des Autobahnlichtes gewährleistet werden.

Nach einer Weiterbildung der Erfindung ist das Lichtmodul des Scheinwerfers als ein Projektionsmodul ausgebildet, das eine Blendenwelle mit mehreren Brennlinien aufweist. Auf diese Weise kann durch Abgabe eines Steuersignals mehrere unterschiedliche Lichtverteilungen, nämlich die Standardlichtverteilung, eine oder mehrere Autobahnlichtverteilungen sowie die Prioritätslichtverteilung erzeugt werden. Vorteilhaft ermöglicht das Lichtmodul eine kompakte Bereitstellung von mehreren Lichtverteilungen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

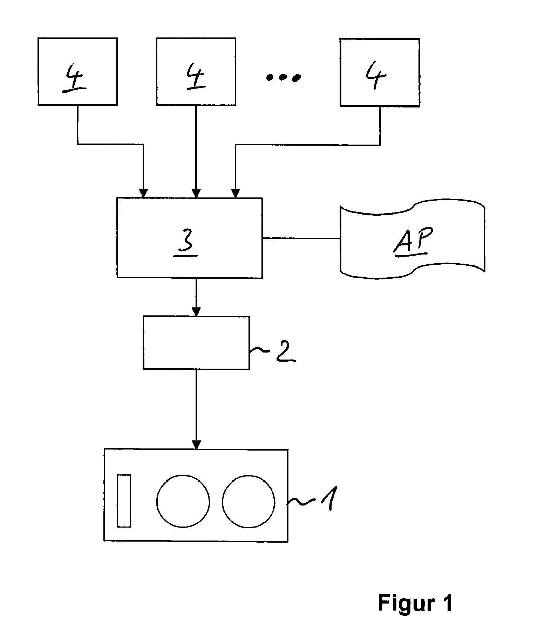

- Figur 1: ein Blockschaltbild eines erfindungsgemäßen Scheinwerfers,
- Figur 2: ein Ablaufdiagramm für ein erfindungsgemäßes Ansteuerprogramm der Stelleinheit und
- Figur 3: ein Schaubild unterschiedlicher Stufen von Autobahnlichtverteilung in Abhängigkeit von unterschiedlichen fahrsituationsabhängigen Parametern.

Ein erfindungsgemäßer Scheinwerfer für Fahrzeuge besteht im Wesentlichen aus einem Lichtmodul 1 zur Erzeugung einer Lichtverteilung, einer Stelleinheit 2 zum Verstellen des Lichtmoduls 1 und einer Steuereinheit 3, in der Steuersignale erzeugt werden, die an dem Eingang der Stelleinheit 2 anliegen.

Das Lichtmodul 1 kann als ein Projektionsmodul ausgebildet sein, das über eine Lichtquelle, einen Reflektor, eine Blendenwelle sowie eine Linse verfügt. Das Lichtmodul 1 kann mehrere Brennlinien entsprechend einer aus der DE 197 39 089 A1 offenbarten Blendenwelle aufweisen, die zur Erzeugung unterschiedlicher Lichtverteilungen konfiguriert sein kann.

Die Stelleinheit 2 kann einen Schrittmotor umfassen, mittels dessen die Blendenwelle verdreht werden kann zur Aktivierung einer bestimmten Brennlinie. Zur Ansteuerung der Stelleinheit 2 erfolgt in der Steuereinheit 3 eine Generierung von Steuersignalen, die unter Anwendung eines Ansteuerprogramms AP berechnet werden. Hierzu weist die Steuereinheit 3 einen Mikrokontroller auf, in dem das Ansteuerprogramm AP implementiert ist.

Die Steuereinheit 3 ist eingansseitig mit mehreren Sensoren 4 über beispielsweise einen CAN-Bus gekoppelt, so dass an dem Eingang der Steuereinheit drei Sensorsignale anliegen, die in der Steuereinheit 3 weiterverarbeitet werden. Das Ansteuerprogramm AP dient zur Berechnung der die Stelleinheit 2 beaufschlagenden Steuersignale, damit eine fahrsituationsabhängige Lichtverteilung einstellbar ist.

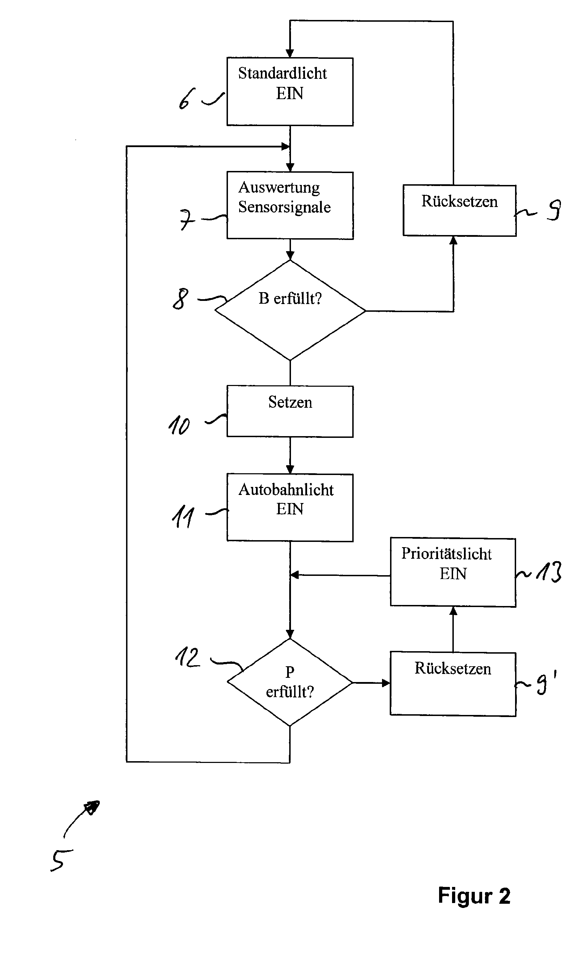

Das Ansteuerprogramm AP weist einen Autobahnlichtprogrammteil 5 auf, in dem das Setzen bzw. Löschen einer Autobahnlichtbedingung gesteuert wird, siehe Figur 2.

Ausgehend von einem Schaltzustand 6, in dem eine Standardlichtverteilung eingeschaltet ist, werden durch die Sensoren 4 bereitgestellte Sensorsignale in einem Schritt 7 ausgewertet. Die Auswertung der Sensordaten erfolgt in einem Zeitintervall T, das beispielsweise eine Zeitdauer von 30 Sekunden bis 2 Minuten betragen kann. In diesem Zeitfenster T werden die für das Setzen des Schaltzustandes "Autobahnlichtverteilung" erforderlichen Autobahnlichtbedingungen überprüft. Zu den Autobahnlichtbedingungen gehören vorzugsweise die Fahrzeuggeschwindigkeit v und der Kurvenradius R, den das Fahrzeug durchfährt, sowie gegebenenfalls die Lenkradbewegung. Der Kurvenradius R dient zur Ermittlung der geometrischen Daten der Straße; die Geschwindigkeit dient zur Überprüfung der erlaubten Höchstgeschwindigkeit und somit indirekt zur Detektion des Straßentyps; die Lenkradbewegung dient zur Feststellung der Gleichmäßigkeit des Straßenverlaufes.

Nach einer weiteren Ausführungsform der Erfindung können die Autobahnlichtbedingungen erweitert werden auf die Parameter "Gierrate" und "Nickwinkel" des Fahrzeugs. Der Nickwinkel dient zur Überprüfung der Gleichmäßigkeit des Straßenverlaufs sowie zur Überprüfung der Straßenqualität. Die Gierrate dient zum Ausgleich von Fehlern bei der Ermittlung des Kurvenradius', welche sich bei höheren Geschwindigkeiten aus der alleinigen Auswertung des Lenkradwinkels ergeben.

Nach einer alternativen Ausführungsform kann die Autobahnlichtbedingung auch durch Ortsinformationen gebildet werden, die durch intelligente GPS-Sensoren bereitgestellt werden. Alternativ können auch kamerabasierte umfeldermittelnde Systeme oder fahrzeugsabstandsermittelnde Sensoren genutzt werden für die Autobahnlichtbedingung.

Die für die Autobahnlichtbedingung erforderlichen Sensorsignale werden durch die Sensoren 4 bereitgestellt.

In einem weiteren Schritt 8 erfolgt eine Überprüfung, ob die Autobahnlichtbedingung B erfüllt ist. Ist die Autobahnlichtbedingung Bnicht erfüllt, beispielsweise weil die Geschwindigkeit v des Fahrzeugs kleiner als 70 km/h ist, erfolgt ein Rücksetzbefehl in Schritt 9, der bewirkt, dass sich das Fahrzeugs weiterhin im Schaltzustand "Standardlichtverteilung" (6) befindet oder - falls der Schaltzustand "Autobahnlichtverteilung ein" - bestanden hat, dieser in den Schaltzustand "Standardlichtverteilung ein" zurückgesetzt wird. Die Standardlichtverteilung ist vorzugsweise als eine Abblendlichtverteilung (Landstraßenlichtverteilung) ausgebildet.

Wird im Schritt 8 erkannt, dass die Autobahnlichtbedingungen B erfüllt sind, wird ein Setzsignal 10 erzeugt, mittels dessen ein Steuersignal erzeugt wird zum Verbringen des Scheinwerfers in den Schaltzustand "Autobahnlichtverteilung ein" (11).

Die Überprüfung der Autobahnlichtbedingungen im Schritt 8 erfolgt ständig innerhalb des Zeitintervalls T. Wird eine bestimmte Bedingung, beispielsweise die Geschwindigkeitshöhe in dem Zeitfenster T nicht erfüllt, wird das Rücksetzsignal 9 eingeleitet. Ein kurzzeitiges Unterschreiten der Geschwindigkeitsbedingung für die Autobahnlichtverteilung innerhalb des Zeitfensters T führ somit nicht zur Rückschaltung in die Standardlichtverteilung.

Im Schaltzustand "Autobahnlichtverteilung ein" erfolgt die Überprüfung einer Prioritätsbedingung P in Schritt 12, wobei bei Vorliegen dieser Prioritätsbedingung P eine schnelle Umschaltung in einen prioritätshöheren Schaltzustand "Prioritätslichtverteilung" erfolgt. Hierzu wird der Rücksetzflag 9' gesetzt und nachfolgend durch ein entsprechendes Steuersignal das Lichtmodul 1 in den Schaltzustand "Prioritätslichtverteilung ein" 13 versetzt. Die Prioritätslichtverteilung kann beispielsweise eine Schlechtwetterlichtverteilung sein. Ist die Prioritätsbedingung 12 nicht erfüllt, erfolgt ein Sprung zurück an den Eingang der Auswertung der Sensordaten 7.

Zur Auswertung der Sensordaten in dem Zeitintervall T kann das Ansteuerungsprogramm ein Überprüfungszeitmodul aufweisen, das die Schritte 7 und 8 vereinigt.

Nach einer besonderen Ausführungsform der Erfindung kann der Übergang zwischen den Schaltzuständen unterschiedlicher Lichtverteilungen mittels eines Übergangszeitmoduls stetig erfolgen, wobei die Stelleinheit nach und nach auf die vorgegebene Stellgröße angesteuert wird.

Nach einer alternativen Ausführungsform kann die "Autobahnlichtverteilung" auch mittels eines zusätzlichen Reflektors und einer zusätzlichen Lichtquelle erzeugt werden, die dem Abblendlicht zugeschaltet werden.

Die Auswertung der Sensordaten und die Überprüfung der Autobahnlichtbedingungen erfolgt sequentiell und wiederkehrend, wobei das Zeitintervall T eine feste Länge aufweist und zum aktuellen Zeitpunkt endet.

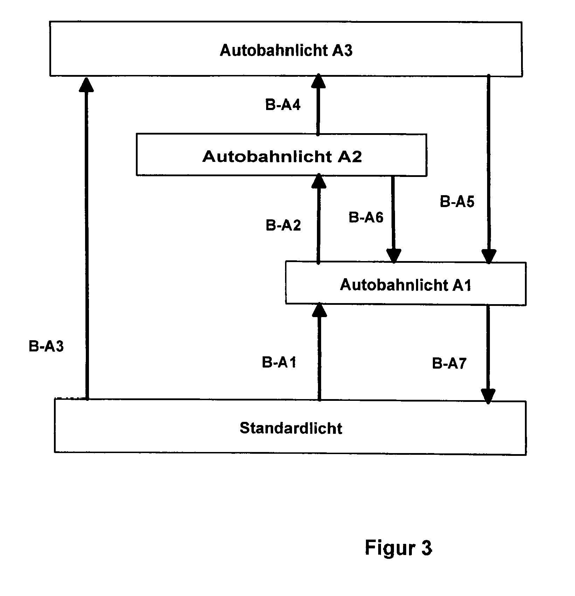

In Figur 3 ist eine weitere Ausführungsform der Erfindung dargestellt, die das Generieren von unterschiedlichen "Autobahnlichtverteilungen A1, A2, A3" ermöglicht. Die Überprüfung der den Pfeilen in Figur 3 zugeordneten Bedingungen erfolgt in dem Schritt 8 gemäß Figur 2. Ausgehend von dem Schaltzustand "Standardlichtverteilung" wird überprüft ob die Bedingung B-A1 oder die Bedingungen B-A3 erfüllt ist. Ist die Bedingung B-A1, nämlich die Fahrzeuggeschwindigkeit v größer 70 km/h und in dem Zeitintervall T der Kurvenradius R größer als ein Wert y, wird in den Schaltzustand "Autobahnlichtverteilung A1" umgeschaltet. Ist die Bedingung B-A3, das heißt die Fahrgeschwindigkeit v ist größer als 110 km/h, erfüllt, wird in den Schaltzustand "Autobahnlichtverteilung A3" umgeschaltet. Die Autobahnlichtverteilungen A1 und A3 unterscheiden sich dadurch, dass die Leuchtdichte und/oder die Leuchtweite des Lichtmoduls 1 bei der "Autobahnlichtverteilung A3" größer eingestellt ist als bei der "Autobahnlichtverteilung A1".

Ist ausgehend vom Schaltzustand "Autobahnlichtverteilung A1" die Bedingung B-A2 erfüllt, dass heißt die Fahrzeuggeschwindigkeit v ist größer als 100 km/h und in dem Zeitintervall T ist der Kurvenradius R größer als Z, erfolgt eine Umschaltung in den Schaltzustand "Autobahnlichtverteilung A2". Der Wert y kann beispielsweise 200 m betragen. Der Wert z kann beispielsweise 6000 m betragen. Erhöht sich die Fahrzeuggeschwindigkeit weiter auf einen Wert von über 110 km/h ist die Bedingung B-A4 erfüllt, so dass aus dem Schaltzustand "Autobahnlichtverteilung A2" in Schaltzustand "Autobahnlichtverteilung A3" geschaltet wird. Eine Rückschaltung des Schaltzustandes "Autobahnlichtverteilung A3" erfolgt ausschließlich bei Erfüllen der Bedingung B-A5 in den Schaltzustand "Autobahnlichtverteilung A1", wobei B-A5 erfüllt ist, sobald die Fahrzeuggeschwindigkeit kleiner ist als 100 km/h einerseits oder die Fahrzeuggeschwindigkeit kleiner ist als 110 km/h und der Kurvenradius R kleiner ist als z andererseits. Eine Zurückschaltung aus dem Schaltzustand "Autobahnlichtverteilung A2" in den Schaltzustand "Autobahnlichtverteilung A1 " erfolgt, wenn die Bedingung B-A6 erfüllt ist. Die Bedingung B-A6 ist erfüllt, wenn die Fahrzeuggeschwindigkeit v kleiner als 80 km/h ist einerseits oder die Fahrzeuggeschwindigkeit v kleiner als 100 km/h und der Kurvenradius R kleiner als z ist andererseits. Eine Rückführung der "Autobahnlichtverteilung A1 " in die "Standardlichtverteilung" erfolgt, wenn die Bedingung B-A7 erfüllt ist, wonach die Fahrzeuggeschwindigkeit v kleiner als 70 km/h ist.

Die unterschiedlichen Autobahnlichtverteilungen (Autobahnlichtmodi) ermöglichen eine weitere Optimierung des Autobahnlichtes an den jeweiligen Fahrzustand.

## Patentansprüche

1. Scheinwerfer für Fahrzeuge
- mit mindestens einem Lichtmodul zur Erzeugung einer Lichtverteilung,
- mit einer dem Lichtmodul zugeordneten Stelleinheit zum Verstellen des Lichtmoduls,
- mit einer Steuereinheit, an dessen Eingang Sensorsignale des Fahrzeugs bereitgestellt sind und die ein Ansteuerprogramm aufweist zur Berechnung von auf die Stelleinheit einwirkenden Steuersignalen, mittels derer eine fahrsituationsabhängige Lichtverteilung einstellbar ist,
**dadurch gekennzeichnet,**
- **dass** das Ansteuerprogramm ein Autobahnlichtprogrammteil (5) aufweist,
- der ein eine Standardlichtverteilung bewirkendes Steuersignal erzeugt, wenn mindestens eine Autobahnlichtbedingung (8) nicht erfüllt ist,
- der ein eine Autobahnlichtverteilung bewirkendes Steuersignal erzeugt, wenn mindestens eine Autobahnlichtbedingungen (8) erfüllt ist,
- der ein eine Prioritätslichtverteilung (13) bewirkendes Steuersignal erzeugt, wenn bei aktivierter Autobahnlichtverteilung eine Prioritätsbedingung (12) erfüllt ist.

2. Scheinwerfer für Fahrzeuge nach Anspruch 1, **dadurch gekennzeichnet, dass** an dem Eingang der Steuereinheit (3) ständig solche Sensorsignale anliegen, dass die Autobahnlichtbedingungen (8) und/oder die Prioritätsbedingungen (12) sequentiell und wiederkehrend überprüfbar sind.

3. Scheinwerfer für Fahrzeuge nach Anspruch 1 oder 2, **dadurch gekennzeichnet, dass** der Autobahnlichtprogrammteil (5) ein Übergangszeitmodul aufweist, derart, dass der Übergang zwischen den Lichtverteilungen stetig erfolgt.

4. Scheinwerfer nach einem der Ansprüche 1 bis 3, **dadurch gekennzeichnet, dass** der Autobahnlichtprogrammteil (5) ein Überprüfungszeitmodul aufweist, derart, dass bei Nichtvorliegen der Autobahnlichtbedingungen (8) in einem vorgegebenen Zeitintervall (T) die Autobahnlichtverteilung deaktiviert und die Standardlichtverteilung aktiviert wird.

5. Scheinwerfer nach einem der Ansprüche 1 bis 4, **dadurch gekennzeichnet, dass** der Autobahnlichtprogrammteil (5) mehrere, unterschiedliche fahrsituationsabhängige Fahrparameter verarbeitet, so dass in Abhängigkeit von der Größe der unterschiedlichen Parameter unterschiedliche Autobahnlichtverteilungen (A1, A2, A3) bewirkende Steuersignale erzeugt werden, wobei auf die Leuchtdichte und die Leuchtweite des Lichtmoduls (1) eingewirkt wird.

6. Scheinwerfer nach einem der Ansprüche 1 bis 5, **dadurch gekennzeichnet, dass** das Lichtmodul (1) als Projektionsmodul mit einer mehrere Brennlinien aufweisende Blendenwelle ausgebildet ist.

7. Scheinwerfer nach einem der Ansprüche 1 bis 6, **dadurch gekennzeichnet, dass** dem Lichtmodul (1) ein zusätzlicher Reflektor zugeordnet ist, der zur Erzeugung der Autobahnlichtverteilung zugeschaltet wird.

8. Scheinwerfer nach Anspruch 7, **dadurch gekennzeichnet, dass** der fahrsituationsabhängige Parameter durch den Lenkwinkel und/oder der Fahrzeuggeschwindigkeit (v) und/oder den Kurvenradius (R) des Fahrzeugs und/oder den Nickwinkel des Fahrzeugs und/oder der Gierrate bestimmt ist.

9. Scheinwerfer nach einem der Ansprüche 1 bis 8, **dadurch gekennzeichnet, dass** die Autobahnlichtbedingung (8) bei Vorliegen mehrerer fahrsituationsabhängiger Parameter erfüllt ist und dass die Autobahnlichtbedingung (8) bei Nichtvorliegen zumindest einer der fahrsituationsabhängigen Parameter in dem vom aktuellen Zeitpunkt zurückliegenden Zeitintervall (T) nicht erfüllt ist.

10. Scheinwerfer nach einem der Ansprüche 1 bis 9, **dadurch gekennzeichnet, dass** der Autobahnlichtprogrammteil (5) in dem Ansteuerprogramm integriert ist, das in einem Mikrokontroller der Steuereinheit (3) implementiert ist.
